# EUROPÄISCHE PATENTSCHRIFT

(11) **EP 2 260 964 B1**
(45) Veröffentlichungstag und Bekanntmachung des Hinweises auf die Patenterteilung: **01.08.2012**
(21) Anmeldenummer: 09161915.5
(22) Anmeldetag: 04.06.2009
(51) Int. Cl.: B23F 1/06, B23F 5/20

(54) **Verfahren und Vorrichtung zum Herstellen einer Innenverzahnung**
Method and device for manufacturing an inner gearing
Procédé et dispositif destinés à la fabrication d'une denture intérieure

(43) Veröffentlichungstag der Anmeldung: 15.12.2010
(73) Patentinhaber: Vereinigte Pignons Fabriken AG, 2540 Grenchen (CH)
(72) Erfinder: Kaufmann, Hanspeter, 2540 Grenchen (CH)
(74) Vertreter: AMMANN PATENTANWÄLTE AG BERN

(56) Entgegenhaltungen:
- CH-A- 420 798
- DE-A1- 4 410 743
- DE-A1- 10 259 222
- DE-B- 1 240 368
- DE-C1- 4 122 461
- SU-A1- 961 875

## Beschreibung

Die vorliegende Erfindung bezieht sich auf ein Verfahren zum Ausbilden einer Innenverzahnung in einem hohlförmigen Werkstück, insbesondere einem Hohlzylinder, durch kontinuierliches oder graduelles Vorschieben eines Werkzeugs zur Materialabtragung nach dem Oberbegriff von Patentanspruch 1. Weiterhin bezieht sich die Erfindung auf eine gattungsgemässe Vorrichtung nach dem Oberbegriff von Patentanspruch 8.

Derartige Innenverzahnungen werden weitestüblich in einem Stossverfahren gefertigt, wobei ein Stosswerkzeug zum Einsatz kommt, das für jede Zahnteilung jeweils eine vollständige Hubbewegung in axialer Richtung ausführt und dabei durch das Abnehmen von Spänen vom Werkstück das gewünschte innere Zahnprofil erzeugt. Bei dem Stosswerkzeug handelt es sich gemeinhin um ein Ritzel mit Schneidkanten an der unteren Stirnfläche. Nach jeder Hubbewegung wird das Stosswerkzeug während eines Leerhubes in seine Ausgangslage zurückgeführt und das Werkstück um eine Zahnteilung weitergeführt. Beim Wälzstossen wird hierzu ein Stosswerkzeug mit einer Mehrzahl von aussenumfänglich angeordneten Ritzeln verwendet, die nach Ausführen der Hubbewegung und des Leerhubes entlang des Innenumfangs des Werkstücks abgewälzt werden, so dass das folgende Ritzel in die Position der am nächsten zu fertigenden Zahnteilung gebracht wird.

Ein Nachteil des Wälzstossens ist dessen niedrige Verzahnungsqualität sowie die geringe Produktivität, da durch die durchzuführenden Leerhübe und die nichtkontinuierliche Arbeitsweise ein Zeitverlust eintritt und somit nur die Herstellung einer vergleichsweise geringen Stückzahl pro Zeiteinheit möglich ist.

Vor allem bei der Herstellung von Aussenverzahnungen hat sich deshalb das Wälzfräsverfahren durchgesetzt, bei welchem ein Fräswerkzeug und das Werkstück relativ zueinander nach Art eines Schneckengetriebes gedreht werden, wobei durch die daraus resultierende Abwälzung des Fräsers am Aussenumfang des Werkstücks die eigentliche Schnittbewegung erzeugt wird. Durch die kontinuierliche Arbeitsweise dieses Verfahrens wird im Vergleich zum Wälzstossen eine höhere Herstellungsrate erzielt. Jedoch ist aufgrund der gängigen Grössenabmessungen der benötigten Fräswerkzeuge die Anwendung des Verfahrens auf Innenverzahnungen problematisch, insbesondere bei Werkstücken mit geringem Innendurchmesser oder bei der Herstellung enger Innenverzahnungen.

DE 12 40 368 B offenbart einen Fräskopf für eine Wälzfräsmaschine zur Herstellung von Innenzahnkränzen Der Fräskopf umfasst einen endseitig angeordneten Innenwälzfräser, der über beidseitig angeordnete parallel zueinander verlaufende Getriebestränge an Zahnräder gekoppelt ist, die von einer Wälzfräsmaschine angetrieben sind.

DE 102 59 222 A1 offenbart eine Vorrichtung zum Fräsen von ringförmigen Innenzahnrädern mit einem innenseitig angeordneten Werkzeugständer, an dem eine Halterung mit einem Fräser befestigt ist. Die Innenverzahnung wird durch eine axialen Vorschubbewegung des Fräsers unter gleichzeitigem Rotieren des werkstücks hergestellt.

CH 420 798 offenbart ein Verfahren nach dem Oberbegriff das Anspruchs 1 sowie eine Vorrichtung nach dem Oberbegriff der Anspruchs 8.

Eine Aufgabe der vorliegenden Erfindung besteht daher darin, ein Verfahren und eine Vorrichtung der eingangs genannten Art anzugeben, durch welche im Vergleich zu einem herkömmlichen Verfahren ein Produktivitätsgewinn und/oder eine Qualitätsverbesserung ermöglicht wird und welche dennoch für die Herstellung verschiedenartiger Innenverzahnungen einsetzbar sind, insbesondere auch bei geringen Innendurchmessern und/oder Zahnabständen.

Diese Aufgabe wird durch das Verfahren gemäss Patentanspruch 1 und durch die Vorrichtung gemäss Patentanspruch 8 gelöst.

Die weiteren Patentansprüche geben bevorzugte Ausführungsformen dieses Verfahrens und dieser Vorrichtung an.

Bei dem erfindungsgemässen Verfahren wird also die Verwendung eines Fräsers als Vorschubwerkzeug vorgeschlagen, um die folgenden Arbeitsschritte an dem Werkstück durchzuführen:
- Positionieren des Fräsers an einem ersten Arbeitspunkt im Randbereich der Innenwandung des Werkstücks; und
- Ausbilden der Innenverzahnung durch Vorschieben des Fräsers entlang einer Vorschubrichtung tangential zur Innenwandung des Werkstücks unter gleichzeitigem Rotieren des Fräsers und des Werkstücks, um ein Abwälzen des Fräsers entlang des Innenumfangs des Werkstücks zu erzielen.

Das erfindungsgemässe Verfahren ist insbesondere bei einem vergleichsweise klein dimensionierten Werkstückinnenraum einsetzbar, der nur wenig über den Fräserdurchmesser hinausgeht. Beispielsweise kann der Innendurchmesser des Werkstücks doppelt so gross oder auch nur um ein Drittel grösser wie der Fräserdurchmesser ausgebildet sein oder auch im Wesentlichen dem Fräserdurchmesser entsprechen, so lange noch das tangentiale Vorschieben des Fräsers entlang der Innenwandung des Werkstücks möglich ist.

Nach dem Ansetzen des Fräsers an den ersten Arbeitspunkt der Werkstückinnenwandung lässt sich das unerwünschte Ausbilden eines abstehenden Grats nicht vermeiden. Die Erfindung schlägt deshalb vor, um ein Entfernen dieses Grats zu erreichen:

Nach dem Positionieren des Fräsers an den ersten Arbeitspunkt wird ein gleichzeitiges Rotieren des Fräsers und des Werkstücks durchgeführt, wobei die Rotationsrichtung des Fräsers am Arbeitspunkt in die Vorschubrichtung weist, in welche der Fräser im nachfolgenden Schritt zur Ausbildung der Innenverzahnung vorgeschoben wird, wodurch eine Gratbildung in Richtung des Innenraums des Werkstücks erzeugt wird.

Nach diesem Schritt der inneren Gratbildung erfolgt ein Umpositionieren des Fräsers am Innenumfang des Werkstücks an einen zweiten Arbeitspunkt, so dass die Rotationsrichtung des Fräsers am zweiten Arbeitspunkt gegen die Vorschubrichtung weist, um derart durch Fortsetzen des Abwälzens und durch das kontinuierliche oder graduelle Vorschieben die Innenverzahnung auszubilden.

Erfindungsgemäss wird also nach dem Verstellen des Fräsers und des Werkstücks relativ zueinander, so dass sich der Fräser an dem ersten Arbeitspunkt befindet, durch die in Richtung des Werkstückinnenraums gerichtete Fräserdrehung erreicht, dass die anfängliche Materialverdrängung in das Werkstückinnere geleitet wird, so dass sich der dabei entstehende Grat nach innen ausbildet. Vorzugsweise wird dieser Schritt so lange ausgeführt, bis der Fräser am Grund der jeweils zu fertigenden Zahnteilung angekommen ist, so dass eine aussenseitige Anfangsnut für die Verzahnung jeweils vollständig ausgebildet ist. Dabei kann der Fräser entweder in seiner anfänglichen Position bezüglich der Axialrichtung des Werkstücks im Wesentlichen feststehen, also noch nicht in die Vorschubrichtung bewegt werden, oder bereits während der Ausbildung des inneren Grats in die Vorschubrichtung bewegt werden. Durch die anschliessende relative Umpositionierung zwischen Fräser und Werkstück an den zweiten Arbeitspunkt und ein zunehmendes Vorschieben des Fräsers in den Werkstückinnenraum wird daraufhin die Materialabtragung des inneren Grats und die kontinuierliche Ausbildung der Innenverzahnung ermöglicht. Dabei ist sowohl ein kontinuierliches als auch ein graduelles Vorschieben des Fräsers in Axialrichtung des Innenraums denkbar.

Durch die relative Umpositionierung des Fräsers zwischen den zwei Arbeitspunkten wird eine Umkehr der Wirkrichtung des Fräsers an den jeweiligen Arbeitspunkten erzielt, ohne dass die eigentliche Rotationsbewegungsrichtung des Fräsers verändert wird. Am einfachsten kann dies dadurch erreicht werden, dass der Fräser relativ zum Werkstück an einen im Wesentlichen gegenüberliegend angeordneten Arbeitspunkt im Werkstückinnenraum umpositioniert wird. Insbesondere bei der Herstellung einer ungeraden Zähneanzahl im Innenraum des Werkstücks kann es dabei zusätzlich erforderlich sein, dass das Werkstück entlang dessen Umfangsrichtung beispielsweise um einen Bruchteil eines Zahndurchmessers gedreht wird, um die korrekte Positionierung des Fräsers an einer zu fertigenden Zahnteilung sicherzustellen.

Ein Vorteil des beschriebenen Verfahrens zur Gratentfernung liegt in der besonders sauberen Entfernung des Innengrats, ohne dass nachträglich optisch sichtbare Spuren zurückbleiben. Weiterhin kann dieses Verfahren auch bei vergleichsweise harten Werkstoffen eingesetzt werden, bei welchen die Entfernung des Grats mittels eines herkömmlichen Schnittwerkzeugs nicht möglich wäre.

Vorzugsweise weist der Fräser ein hinterschliffenes Schneidenprofil auf, wobei die länger ausgebildete Schneidenkante in die Rotationsrichtung des Fräsers weist. Dadurch ist gewährleistet, dass beim Ausbilden des Innengrats am ersten Arbeitspunkt die längere Schneidenkante in Richtung der Materialverdrängung rotiert wird und dass beim Fräsen nach dem Umpositionieren an den zweiten Arbeitspunkt die längere Schneidenkante gegen die Vorschubrichtung rotiert wird. Bevorzugt wird dabei ein logarithmisch hinterschliffenes Schneidenprofil angewendet.

In einer bevorzugten Anwendung wird durch das erfindungsgemässe Verfahren eine Geradverzahnung hergestellt, die im Wesentlichen in Richtung der Zentralachse des Innenraums des Werkstücks weist. Ebenso sind aber auch innere Schrägverzahnungen denkbar. Prinzipiell können durch das erfindungsgemässe Verfahren beliebige Zahnformen hergestellt werden, insbesondere eine Evolventen- oder Zykloidenzahnform.

In seiner einfachsten Ausführungsform wird das Verfahren mit einem Fräser durchgeführt, der genau einen Fräserzahn aufweist, welcher vorzugsweise die voranstehend beschriebene Schneidenform besitzt. Dadurch ist ein flexibler Einsatz für die Herstellung verschiedenartiger Verzahnungsarten ermöglicht. Zur Produktivitätssteigerung und Verschleissminderung ist jedoch auch die Verwendung eines Fräsers mit mehreren Fräserzähnen möglich, beispielsweise mit bis zu sieben Fräserzähnen, wobei die Anzahl und Anordnung der Fräserzähne an die Werkstückgrösse und/oder an die jeweils gewünschte Verzahnungsart anzupassen sind. Je nach Geometrie und Grösse des Werkstücks und Art der herzustellenden Innenverzahnung ist auch eine Verwendung von mehr als sieben Fräserzähnen denkbar, wobei jedoch gegebenenfalls eine niedrigere Verzahnungsqualität in Kauf zu nehmen ist.

Die erfindungsgemässe Vorrichtung weist mindestens einen Fräser auf, der zum Positionieren an einem ersten Arbeitspunkt im Randbereich der Innenwandung des Werkstücks und zum relativen Vorschieben in den Innenraum des Werkstücks entlang einer Vorschubrichtung tangential zu dessen Innenwandung ausgebildet ist und ist gemäß den Merkmalen des Anspruchs 8 ausgebildet.

Zur Durchführung des voranstehend beschriebenen Verfahrens zur Gratentfernung weist die Vorrichtung eine Einrichtung zum relativen Umpositionieren des Fräsers zwischen den zwei Arbeitspunkten am Innenumfang des Werkstücks auf. Eine derartige Einrichtung kann beispielsweise zu einem manuellen oder automatisierten Umpositioneren des Fräsers und/oder des Werkstücks zwischen den zwei Arbeitspunkten ausgebildet sein. Bevorzugt ist die genannte Einrichtung nur entlang einer einzigen translatorischen Dimension verstellbar, so dass ein einfaches und genau reproduzierbares Umpositionieren möglich ist und gleichzeitig eine hohe Stabilisierung des Fräsers bezüglich der verbleibenden räumlichen Freiheitsgrade gewährleistet ist.

Der Fräser ist derart ausgebildet, dass er an mindestens zwei Aussenbereichen frei liegt, um das relative Positionieren des Fräsers an den zwei Arbeitspunkten zu ermöglichen. Weiterhin sind die zwei freien Aussenbereiche an einander entgegengesetzten Fräserseiten angeordnet, wodurch der Fräser auf einfache Weise an gegenüberliegenden Arbeitspunkten im Innenraum des Werkstücks positionierbar ist.

Zur Bereitstellung dieser freiliegenden Aussenbereiche und um gleichzeitig die benötigte gute Stabilisierung des Fräsers zu erreichen, wird vorgeschlagen, dass die Fräserachse mit einem Längsträger verbunden ist, der sich im Wesentlichen in Richtung der Vorschubrichtung erstreckt. Vorzugsweise ragt der Längsträger nur auf einer Seite über den Fräserumfang hinaus, äusserst bevorzugt nur auf der von der Vorschubrichtung abgewandten Seite, so dass der Fräser an allen übrigen Seitenbereichen frei liegt.

Zur einfachen und kompakten Übertragung der Antriebskraft auf den Fräser kann vorgesehen sein, dass an dem Längsträger weiterhin mindestens zwei Zahnräder zum Antrieb des Fräsers angelenkt sind, durch die ein Weiterleiten der Rotationskraft von dem Fräserantrieb an den Fräser gewährleistet ist, wobei die Zahnräder entlang einer im Wesentlichen zur Vorschubrichtung parallelen Längsreihe angeordnet sind. Dadurch kann insbesondere eine vergrösserte Beabstandung des Fräsermotors zum Fräser realisiert werden, um ein Einführen des Fräsers in den Innenraum des Werkstücks zu ermöglichen, ohne durch einen wenig kompakten Motor behindert zu werden.

Um während des Fräsens ein Verkanten des Fräsers an der konkaven Innenwandungskrümmung des Werkstücks zu vermeiden wird eine kompakte Abmessung der Fräserdicke vorgeschlagen. Dabei ist die maximal mögliche Fräserdicke vom inneren Krümmungsradius des jeweils zu bearbeitenden Werkstücks abhängig und sollte bevorzugt nicht über ein Viertel des Werkstückinnendurchmessers hinausgehen. Zur Innenverzahnungsherstellung bei vergleichsweise kleinen Innendurchmessern wird deshalb bevorzugt ein Fräser verwendet, dessen Fräserdicke weniger als ein Drittel des Fräserdurchmessers beträgt. Weiter bevorzugt, insbesondere bei der Fertigung tiefer oder qualitativ besonders hochwertiger Innenverzahnungen, wird dabei eine Fräserdicke verwendet, die nicht über ein Achtel des Werkstückinnendurchmessers hinausgeht. Äusserst bevorzugt ist die Fräserdicke auf weniger als ein Achtel des Fräserdurchmessers begrenzt. Beispielsweise kann bei der Innenverzahnung eines Werkstücks mit einem Innendurchmesser von 18 mm ein Fräser zum Einsatz kommen, dessen Durchmesser 16 mm und dessen Dicke 2 mm beträgt.

Vorzugsweise ist die Fräserdicke ferner in Abhängigkeit von der Breite der zu fertigenden Zahnteilungen und damit einhergehend abhängig von der Schneidengeometrie des Fräsers gewählt. Dabei ist insbesondere eine Fräserdicke vorteilhaft, die nicht über die fünffache Dicke, vorzugsweise nicht über die dreifache Dicke, eines Fräserzahns hinausgeht.

Durch eine solche Vorrichtung ist insbesondere die Herstellung von Innenverzahnungen an Werkstücken mit geringem Innendurchmesser ermöglicht, wobei der Innendurchmesser des Werkstücks beispielsweise doppelt so gross oder nur um ein Drittel grösser als der Fräserdurchmesser ausgebildet ist oder auch im Wesentlichen dem Fräserdurchmesser entspricht, so lange noch das tangentiale Vorschieben des Fräsers entlang der Innenwandung des Werkstücks möglich ist.

Nachfolgend ist die Erfindung anhand bevorzugter Ausführungsformen unter Bezugnahme auf die Zeichungen näher erläutert, anhand welchen sich weitere Eigenschaften und Vorteile der Erfindung ergeben. Dabei zeigen:
- Fig. 1:: eine perspektivische Darstellung eines Werkstücks, an dem eine Innenverzahnung auszubilden ist;
- Fig. 2:: das in Fig. 1 gezeigte Werkstück nach dem Ausbilden der Innenverzahnung;
- Fig. 3:: eine perspektivische Ansicht einer erfindungsgemässen Vorrichtung zum Ausbilden der Innenverzahnung und des in Fig. 2 gezeigten Werkstücks;
- Fig. 4:: eine Draufsicht auf die in Fig. 3 gezeigte Vorrichtung und das Werkstück;
- Fig. 5:: eine Detailansicht des Fräsers der in Fig. 3 und Fig. 4 gezeigten Vorrichtung in perspektivischer Darstellung;
- Fig. 6:: eine Detailansicht des Fräsers und des Längsträgers der in Fig. 3 und Fig. 4 gezeigten Vorrichtung in einer Seitenansicht, sowie eine Schnittansicht des darin gezeigten Werkstücks, wobei der Fräser an einem ersten Arbeitspunkt an dem Werkstück positioniert ist;
- Fig. 7:: den in Fig. 6 gezeigten Fräser und das Werkstück bei der Durchführung eines erfindungsgemässen Verfahrensschritts zur Ausbildung eines nach innen gerichteten Grats;
- Fig. 8:: den in Fig. 7 gezeigten Fräser und das Werkstück nach der Umpositionierung des Fräsers an einen zweiten Arbeitspunkt; und
- Fig. 9:: den in Fig. 8 gezeigten Fräser und das Werkstück beim Ausfräsen der Innenverzahnung durch kontinuierliches Vorschieben des Fräsers.

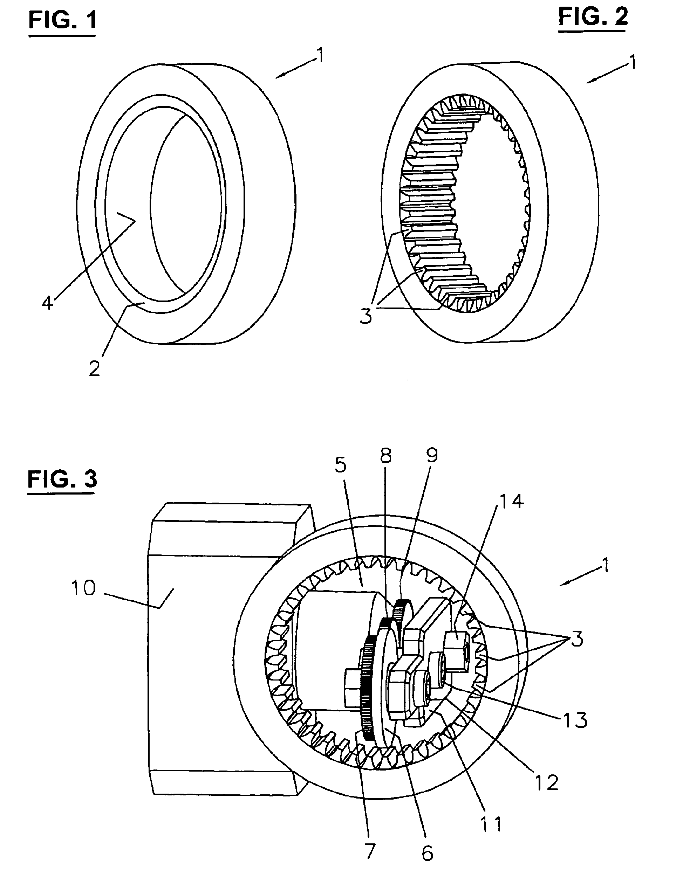

In Fig. 1 ist ein Werkstück 1 in Form eines Hohlrades dargestellt, an dessen innerem Radialabschnitt 2 eine Verjüngung vorhanden ist, entlang welcher eine Innenverzahnung gefertigt werden soll. Ferner ist die noch unverzahnte Innenwandung 4 des Werkstücks 1 dargestellt.

Die Fig. 2 zeigt das Werkstück 1 nach dem Ausbilden der Innenverzahnung, wobei die einzelnen gefertigten Zähne 3 eine Evolventenzahnform aufweisen und sich geradlinig in Richtung der Zentralachse des Werkstücks 1 erstrecken.

Die Fig. 3 zeigt nochmals das Werkstück 1 sowie eine erfindungsgemässe Vorrichtung 5, die zum Herstellen einer derartigen Innenverzahnung geeignet ist. Die Vorrichtung 5 umfasst einen im Wesentlichen kreisscheibenförmig ausgebildeten Fräser 6, an dessen rückseitiger Seitenfläche ein Antriebszahnrad 7 starr befestigt ist. Der Innendurchmesser des Werkstücks 1 ist kleiner als der doppelte Durchmesser des Fräsers 6.

Das Antriebszahnrad 7 steht mit einem Zwischenzahnrad 8 im Eingriff, welches wiederum in ein Spindelzahnrad 9 eingreift, das von einem Motor über eine Antriebsspindel 10 angetrieben wird, wodurch eine Rotationsbewegung in den Fräser 6 einleitbar ist. Die Zahnräder 7, 8, 9 sind im Wesentlichen identisch ausgebildet, so dass ein Übersetzungsverhältnis vom Betrag eins zwischen den Umdrehungen der Antriebsspindel 10 und des Fräsers 6 besteht.

Die Zahnräder 7, 8, 9 sind entlang ihrer Reihenanordnung in ihrer Zentralachse mit einem Längsträger in Form einer Befestigungsplatte 11 über jeweils ein Lager 12, 13, 14 verbunden, wobei die Befestigungsplatte 11 nur an einer Seite über den Umfang des Fräsers 6 hinausragt, so dass der Fräser 6 an den restlichen Umfangsbereichen frei liegt.

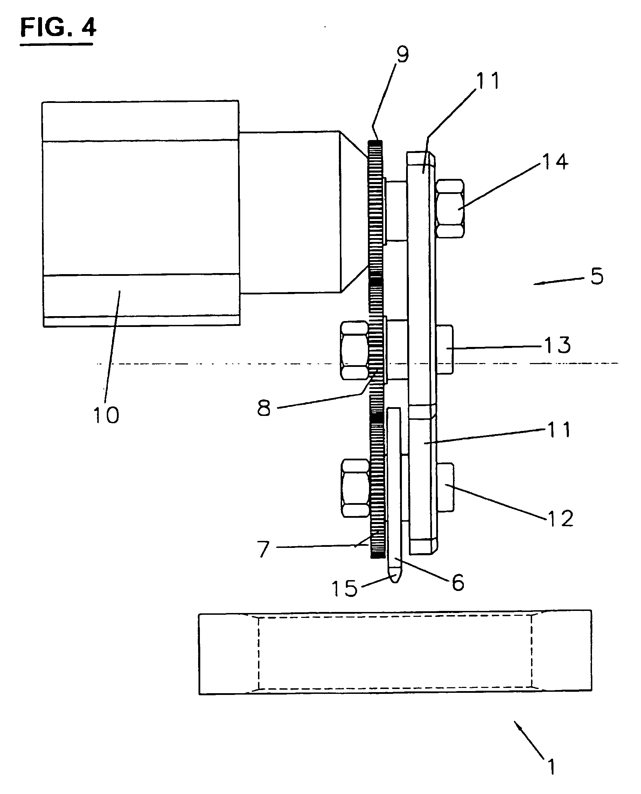

Die Fig. 4 zeigt Vorrichtung 5 und das damit gefertigte Werkstück 1 in einer Draufsicht. Darin ist insbesondere ein Fräserzahn 15 am Aussenumfang des Fräsers 6 erkennbar, durch den die eigentliche Schnittbewegung zum Ausbilden der Innenverzahnung auf das Werkstück 1 übertragen wird.

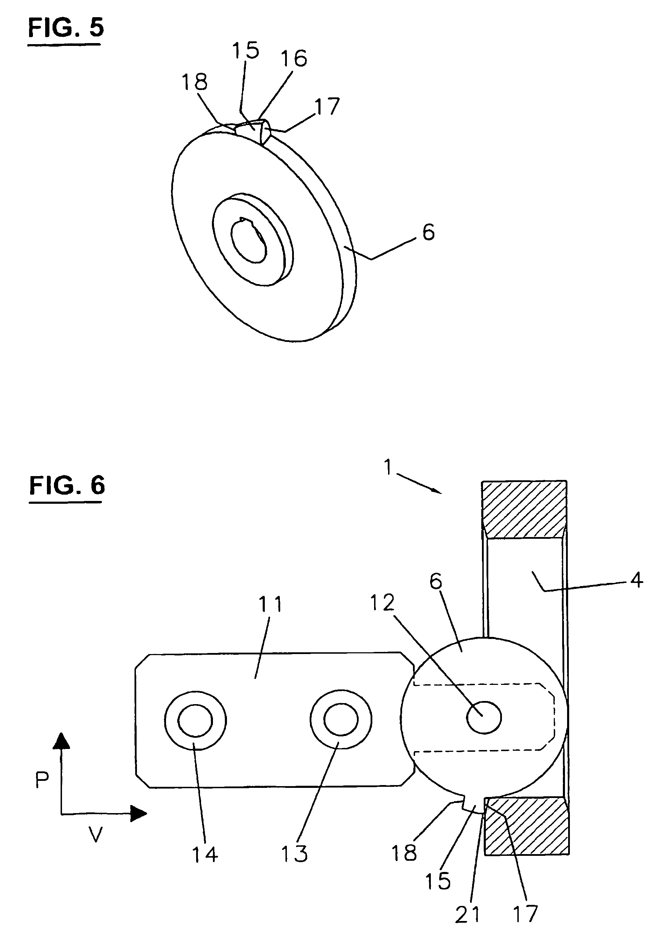

Die Fig. 5 zeigt eine Detailansicht des kreisscheibenförmigen Fräsers 6 in einer perspektivischen Darstellung. Darin ist ersichtlich, dass der Fräser 6 nur den einzelnen Fräserzahn 15 aufweist. Der Fräserzahn 15 weist in Umfangsrichtung des Fräsers 6 eine logarithmisch hinterschliffene Schneidenform 16 auf, so dass der Fräserzahn 15 eine längere Stirnkante 17 und eine kürzere Rückkante 18 besitzt. Weiterhin ist die Schneidenform 16 bezüglich der Fräserumfangsrichtung schräg gestellt, so dass der Fräser 6 am Innenumfang des Werkstücks 1 abwälzbar ist. Die Dicke des Fräsers 6 entspricht weniger als einem Achtel des Fräserdurchmessers und entspricht weiterhin im Wesentlichen der der Schneidenoberseite entgegengesetzten Dicke des Fräserzahns 15. Durch diese kompakte Ausbildung des Fräsers 6 ist das Heranführen und Vorschieben des Fräsers 6 ohne ein Verkanten des Fräsers 6 entlang einer konkav gekrümmten Innenwandung 4 bei der Herstellung der Innenverzahnung ermöglicht.

In Fig. 6 sind der Fräser 6 und die Befestigungsplatte 11 in einer Detailansicht dargestellt sowie ein Längsschnitt durch das Werkstück 1. Zusätzlich ist durch entsprechende Pfeile eine Vorschubrichtung V axial zum Werkstück 1 und eine Positionierrichtung P parallel zum Werkstück 1 angedeutet, entlang welchen das Werkstück 1 und der Fräser 6 relativ zueinander verstellbar sind. Die relative Verstellbarkeit kann durch entsprechende Einrichtungen am Fräser 6 oder am Werkstück 1 oder an beiden gewährleistet sein. Beispielsweise ist eine Vorschubeinrichtung des Fräsers 6 in die Vorschubrichtung V denkbar, während das Werkstück 1 in der Positionierrichtung P umpositionierbar ist.

Nachfolgend ist anhand der Figg. 6 bis 9 ein Verfahren zum Herstellen der Innenverzahnung an dem Werkstück 1 erläutert:

In einem ersten Verfahrensschritt erfolgt ein relatives Positionieren des Fräsers 6 an einen ersten Arbeitspunkt 21 im Randbereich der Innenwandung 4 des Werkstücks 1, wie dieser in Fig. 6 dargestellt ist. Wie voranstehend erläutert kann dies durch Verstellen des Fräsers 6 oder des Werkstücks 1 oder von beiden erreicht werden.

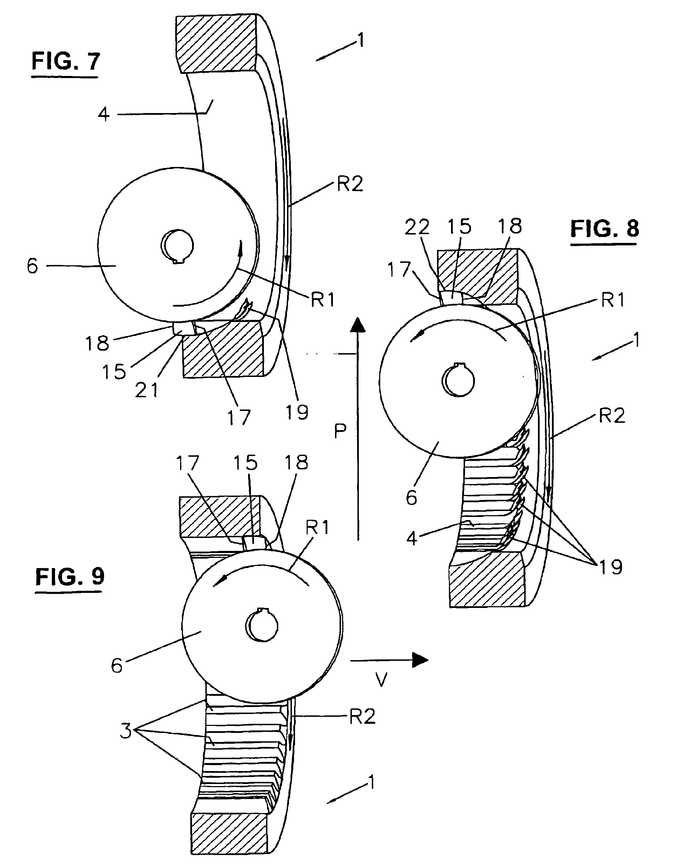

Die Fig. 7 zeigt einen zweiten Verfahrensschritt, wobei aus Anschaulichkeitsgründen lediglich der Fräser 6 und das Werkstück 1 dargestellt sind. Dabei erfolgt ein gleichzeitiges Rotieren des Fräsers 6 in Rotationsrichtung R1 und des Werkstücks 1 in Rotationsrichtung R2, um ein Abwälzen des Fräsers 6 entlang des Innenumfangs des Werkstücks 1 zu erzielen. Die Rotationsrichtung R1 des Fräsers 6 weist am Arbeitspunkt 21 in Richtung des Werkstückinnenraums, also in die Richtung V des anschliessend durchgeführten Vorschiebens des Fräsers 6. Dadurch wird auch die längere Stirnkante 17 des Fräserzahns 15 in Innenrichtung des Werkstücks 1 bewegt, so dass eine Materialverdrängung und damit einhergehende Gratbildung in den Innenraum des Werkstücks 1 stattfindet. Der dabei ausgebildete Grat 19 ist ebenfalls dargestellt.

Nach einer vollumfänglichen Abwälzung, so dass für jede zu bildende Zahnlücke ein innerer Grat 19 geschaffen ist, erfolgt im darauffolgenden Verfahrensschritt gemäss Fig. 8 ein relatives Verstellen zwischen Werkstück 1 und Fräser 6 entlang der Positionierrichtung P, so dass der Fräser 6 an einem ausgehend vom ersten Arbeitspunkt 21 im Wesentlichen gegenüberliegend angeordneten zweiten Arbeitspunkt 22 bezüglich der Innenumfangsrichtung des Werkstücks 1 angeordnet wird. Dies wird durch Verstellen des Fräsers 6 erreicht. Bei ungerader Zähnezahl ist eine Korrektur durch Positionierung des Werkstückes 1 erforderlich, so dass der Fräserzahn 15 in die zu fertigende Zahnteilung ragt. Dadurch wird erreicht, dass die Rotationsrichtung R1 des Fräsers 6 am Arbeitspunkt 22 gegen die Vorschubrichtung V weist. Folglich wird auch die längere Stirnkante 17 des Fräserzahns 15 gegen die Vorschubrichtung V bewegt.

Schliesslich wird in einem weiteren Verfahrensschritt gemäss Fig. 9 der Fräser 6 kontinuierlich in die Vorschubrichtung V bewegt und durch die Abwälzbewegung zwischen Fräser 6 und Innenumfang des Werkstücks 1 der Innengrat 19 entfernt und die gewünschte Evolventenzahnform entlang der Innenwandung 4 hergestellt.

Aus der vorangehenden Beschreibung sind dem Fachmann Abwandlungen des erfindungsgemässen Verfahrens und der Vorrichtung zugänglich, ohne den Schutzbereich der Erfindung zu verlassen, der allein durch die Patentansprüche definiert ist. Denkbar ist u.a.:
- der Fräser 6 kann neben der gezeigten logarithmischen Schneidenform 16 auch eine andere Schneidengeometrie aufweisen, sowie mit einer Mehrzahl von Fräserzähnen 15 ausgestattet sein, die entlang des Fräserumfangs und/oder in der Fräseraxialrichtung voneinander beabstandet sind;
- beim Ausbilden des inneren Grats 19 kann der Fräser 6 am ersten Arbeitspunkt 21 bereits in die Vorschubrichtung V bewegt werden oder im Wesentlichen in einer konstanten Axialposition bezüglich des Werkstücks 1 gehalten werden und erst nach dem Umpositionieren an den zweiten Arbeitspunkt 22 vorgeschoben werden;
- zum Ausbilden des inneren Grats 19 können eine oder mehrere umfängliche Abwälzbewegungen zwischen Fräser 6 und Werkstück 1 vorgesehen sein;
- Alle Vorschub- und Positionierbewegungen zwischen Fräser 6 und Werkstück 1 sind relativ zueinander zu verstehen und können sowohl durch Verstellen der Position des Fräsers 6 als auch des Werkstücks 1 als auch von beiden bewerkstelligt werden.

## Patentansprüche

1. Verfahren zum Ausbilden einer Innenverzahnung in einem hohlförmigen Werkstück (1), insbesondere einem Hohlzylinder, durch kontinuierliches oder graduelles Vorschieben eines Werkzeugs (6) zur Materialabtragung, **wobei** das Werkzeug einen Fräser (6) aufweist und das Verfahren folgende Schritte umfasst:
- Positionieren des Fräsers (6) an einem ersten Arbeitspunkt (21) im Randbereich der Innenwandung (4) des Werkstücks; und
- Ausbilden der Innenverzahnung durch Vorschieben des Fräsers (6) entlang einer Vorschubrichtung (V) tangential zur Innenwandung (4) des Werkstücks (1) unter gleichzeitigem Rotieren des Fräsers (6) und des Werkstücks (1), um ein Abwälzen des Fräsers (6) entlang des Innenumfangs des Werkstücks (1) zu erzielen,
wobei nach dem Schritt des Positionierens des Fräsers (6) an dem ersten Arbeitspunkt (21) und vor dem Schritt des Ausbildens der Innenverzahnung durch Vorschieben des Fräsers (6) folgende Schritte durchgeführt werden:
- gleichzeitiges Rotieren des Fräsers (6) und des Werkstücks (1), um ein Abwälzen des Fräsers (6) entlang des Innenumfangs des Werkstücks (1) zu erzielen, wobei die Rotationsrichtung (R1) des Fräsers (6) am Arbeitspunkt (21) in die Vorschubrichtung (V) weist, wodurch eine Gratbildung in Richtung des Innenraums des Werkstücks (1) erzeugt wird;
**gekennzeichnet durch**
- Umpositionieren des Fräsers (6) an einen zweiten Arbeitspunkt (22) am Innenumfang des Werkstücks (1), so dass die Rotationsrichtung (R1) des Fräsers (6) am Arbeitspunkt (22) gegen die Vorschubrichtung (V) weist, um anschliessend die Innenverzahnung auszubilden.

2. Verfahren nach Anspruch 1, **dadurch gekennzeichnet, dass** der Fräser (6) an einen im Wesentlichen gegenüberliegend angeordneten Arbeitspunkt (22) umpositioniert wird.

3. Verfahren nach Anspruch 1, **dadurch gekennzeichnet, dass** nach dem Schritt des Positionierens des Fräsers (6) an dem ersten Arbeitspunkt (21) und vor oder während des Schritts des Ausbildens der Innenverzahnung durch Vorschieben des Fräsers (6) folgender Schritt durchgeführt wird:
- gleichzeitiges Rotieren des Fräsers (6) und des Werkstücks (1), um ein Abwälzen des Fräsers (6) entlang des Innenumfangs des Werkstücks (1) zu erzielen, wobei die Rotationsrichtung (R1) des Fräsers (6) am Arbeitspunkt (21) gegen die Vorschubrichtung (V) weist, wodurch eine Gratbildung in Richtung des Aussenraums des Werkstücks (1) erzeugt wird.

4. Verfahren nach Anspruch 3, **dadurch gekennzeichnet, dass** während des Schritts des Ausbildens der Innenverzahnung durch Vorschieben des Fräsers (6) folgender Schritt durchgeführt wird:
- Positionieren eines Schneidewerkzeugs an den Randbereich der Innenwandung (4) des Werkstücks (1), um derart den in Richtung des Aussenraums des Werkstücks (1) gebildeten Grat zu entfernen.

5. Verfahren nach einem der Ansprüche 1 bis 4, **dadurch gekennzeichnet, dass** der Innendurchmesser des Werkstücks (1) höchstens doppelt so gross, vorzugsweise höchstens um ein Drittel grösser, wie der Fräserdurchmesser ausgebildet ist.

6. Verfahren nach einem der Ansprüche 1 bis 5, dadurch gekennzeichet, dass eine Geradverzahnung (3) hergestellt wird, die im Wesentlichen in Richtung der Zentralachse des Innenraums des Werkstücks (1) weist.

7. Verfahren nach einem der Ansprüche 1 bis 6, dadurch gekennzeichet, dass der Fräser (6) zwischen einem und sieben, vorzugsweise genau einen, Fräserzahn (15) aufweist.

8. Vorrichtung zum Ausbilden einer Innenverzahnung in einem hohlförmigen Werkstück (1), insbesondere einem Hohlzylinder mit einem Fräser (6), der zum Positionieren an einem ersten Arbeitspunkt (21) im Randbereich der Innenwandung (4) des Werkstücks und zum Vorschieben in den Innenraum des Werkstücks (4) entlang einer Vorschubrichtung (V) tangential zu dessen Innenwandung (4) ausgebildet ist
**dadurch gekennzeichnet, dass** der Fräser (6) an zwei einander entgegengesetzt angeordneten Fräserseiten frei liegt,
wobei die Rotationsrichtung des Fräsers (6) an der einen freiliegenden Fräserseite in die Vorschubrichtung weist in welche der Fräser im nach folgenden Schritt zur Ausbildung der Innenverzaknung von geschoben wird, dadurch im Betrieb eine Grabbildung in Richtung das Innenraums des Werkstrücks erzeugt wird, und die Rotationsrichtungs des Fräsers (6) an der anderen freiliegenden Fräserseite im Betrieb gegen die Vorschubrichtung weist, um durch Fortsetzen des Abwälzens und durch Vorschieben die Innenverzahnung auszubilden, und die Vorrichtung
eine Einrichtung zum Umpositionieren des Fräsers zwischen dem ersten Arbeitspunkt (21) und einem zweiten Arbeitspunkt (22) am Innenumfang des Werkstücks (1) aufweist, so dass der Fräser (6) nach dem Umpositionieren an der anderen freiliegenden Fräserseite mit dem zweiten Arbeitspunkt kontaktiert wird.

9. Vorrichtung nach
Anspruch 8, **gekennzeichnet durch** mindestens zwei, vorzugsweise mindestens drei, Zahnräder (7, 8, 9) zum Weiterleiten der Rotationskraft von einem Fräserantrieb an den Fräser, wobei die Zahnräder (12, 13, 14) im Wesentlichen in der Vorschubrichtung (V) in einer Längsreihe angeordnet sind.

10. Vorrichtung nach Anspruch 8 oder 9, **dadurch gekennzeichnet, dass** die Fräserachse mit einem Längsträger (11) verbunden ist, der sich im Wesentlichen in Richtung der Vorschubrichtung (V) erstreckt.

11. Vorrichtung nach einem der Ansprüche 8 bis 10, **dadurch gekennzeichnet, dass** die Fräserdicke weniger als ein Drittel, vorzugsweise weniger als ein Achtel, des Fräserdurchmessers beträgt.

## Claims

1. Method for forming an inner gearing in a hollow workpiece (1), in particular a hollow cylinder, by continuous or gradual forward feeding of a tool (6) for removal of material, the tool comprising a cutter (6), and the method comprising the steps of:
- positioning the cutter (6) at a first working point (21) in the edge region of the inner wall (4) of the workpiece; and
- forming the inner gearing by feeding the cutter (6) forward along a feed direction (V) tangentially to the inner wall (4) of the workpiece (1) while simultaneously rotating the cutter (6) and the workpiece (1) in order to make the cutter (6) roll off along the inner circumference of the workpiece (1), the following steps being performed after the step of positioning the cutter (6) at the first working point (21) and before the step of forming the inner gearing by feeding the cutter (6) forward:
- simultaneous rotation of the cutter (6) and of the workpiece (1) to make the cutter (6) roll off along the inner circumference of the workpiece (1), the direction of rotation (R1) of the cutter (6) at the working point (21) being directed into the feed direction (V), whereby formation of a burr toward the interior of the workpiece (1) is produced,
**characterised by**
- repositioning the cutter (6) to a second working point (22) on the inner circumference of the workpiece (1) such that the direction of rotation (R1) of the cutter (6) at the working point (22) is opposed to the feed direction (V) in order to subsequently form the inner gearing.

2. Method according to claim 1, **characterised in that** the cutter (6) is repositioned to a substantially opposed working point (22).

3. Method according to claim 1, **characterised in that** after the step of positioning the cutter (6) at the first working point (21) and before or during the step of forming the inner gearing by feeding the cutter (6) forward, the following step is performed:
- simultaneous rotation of the cutter (6) and of the workpiece (1) to make the cutter (6) roll off along the inner circumference of the workpiece (1), the direction of rotation (R1) of the cutter (6) at the working point (21) being opposed to the feed direction (V), whereby a burr formation toward the exterior of the workpiece (1) is produced.

4. Method according to claim 3, **characterised in that** during the step of forming the inner gearing by feeding the cutter (6) forward, the following step is performed:
- positioning a cutting tool to the edge area of the inner wall (4) of the workpiece (1) in order to thus remove the burr formed toward the exterior of the workpiece (1).

5. Method according to any one of claims 1 to 4, **characterised in that** the internal diameter of the workpiece (1) is at most twice as large and preferably at most a third larger than the diameter of the cutter.

6. Method according to any one of claims 1 to 5, **characterised in that** a straight gear (3) is produced that substantially extends toward the central axis of the interior of the workpiece (1).

7. Method according to any one of claims 1 to 6, **characterised in that** the cutter (6) has from one to seven, preferably exactly one cutter tooth (15).

8. Device for forming an inner gearing in a hollow workpiece (1), in particular a hollow cylinder, comprising a cutter (6) that is configured to be positioned at a first working point (21) in the edge region of the inner wall (4) of the workpiece and to be fed forward into the interior of the workpiece (4) along a feed direction (V) tangentially to its inner wall (4), **characterised in that** the cutter (6) is open on two opposite cutter sides, wherein the direction of rotation of the cutter (6) on one of the open cutter sides is directed to the feed direction in which the cutter is to be fed forward during the following step of forming the inner gearing, thereby producing formation of a burr toward the interior of the workpiece during operation, and the direction of rotation of the cutter (6) on the other open cutter side is opposed to the feed direction to form the inner gearing by continued rolling off and forward feeding, and the device comprising means for repositioning the cutter between the first working point (21) and a second working point (22) on the inner circumference of the workpiece (1) such that after repositioning, the cutter (6) is contacted with the second working point on the other open cutter side.

9. Device according to claim 8, **characterised by** at least two, preferably at least three gearwheels (7, 8, 9) for transmitting the rotary force from a cutter drive to the cutter, the gearwheels (12, 13, 14) being arranged in a longitudinal row substantially in the feed direction (V).

10. Device according to claim 8 or 9, **characterised in that** the cutter axis is connected to a longitudinal support (11) that substantially extends in the feed direction (V).

11. Device according to any one of claims 8 to 10, **characterised in that** the thickness of the cutter is less than one third, preferably less than one eighth of the cutter diameter.

## Revendications

1. Procédé pour la formation d'une denture intérieure dans une pièce (1) de forme creuse, plus particulièrement un cylindre creux, par l'avancement continu ou graduel d'un outil (6) d'enlèvement de matière, l'outil comprenant une fraise (6), et le procédé comprenant les étapes consistant à:
- positionner la fraise (6) sur un premier point de travail (21) dans la région du bord de la paroi intérieure (4) de la pièce; et
- former la denture intérieure en avançant la fraise (6) le long d'une direction d'avance (V) tangentielle à la paroi intérieure (4) de la pièce (1) en entraînant simultanément en rotation la fraise (6) et la pièce (1) afin de produire un roulement de la fraise (6) le long de la circonférence intérieure de la pièce (1), les étapes suivantes étant mises en oeuvre après l'étape du positionnement de la fraise (6) sur le premier point de travail (21) et avant l'étape de la formation de la denture intérieure par l'avancement de la fraise (6):
- entraînement en rotation simultané de la fraise (6) et de la pièce (1) afin de produire un roulement de la fraise (6) le long de la circonférence intérieure de la pièce (1), le sens de rotation (R1) de la fraise (6) au point de travail (21) allant dans la direction d'avance (V), ce qui conduit à la formation d'une bavure dirigée vers l'intérieur de la pièce (1);
**caractérisé par**
- le repositionnement de la fraise (6) sur un deuxième point de travail (22) sur la circonférence intérieure de la pièce (1) de telle manière que le sens de rotation (R1) de la fraise (6) au point de travail (22) est opposé à la direction d'avance (V) pour former ensuite la denture intérieure.

2. Procédé selon la revendication 1, **caractérisé en ce que** la fraise (6) est repositionnée sur un point de travail (22) substantiellement opposé.

3. Procédé selon la revendication 1, **caractérisé en ce qu'**après l'étape du positionnement de la fraise (6) sur un premier point de travail (21) et avant ou pendant l'étape de la formation de la denture intérieure par l'avancement de la fraise (6), l'étape suivante est mise en oeuvre:
- entraînement en rotation simultané de la fraise (6) et de la pièce (1) afin d'obtenir un roulement de la fraise (6) le long de la circonférence intérieure de la pièce (1), le sens de rotation (R1) de la fraise (6) au point de travail (21) étant opposé à la direction d'avance (V), ce qui conduit à la formation d'une bavure dirigée vers l'extérieur de la pièce (1).

4. Procédé selon la revendication 3, **caractérisé en ce que** pendant l'étape de la formation de la denture intérieure par l'avancement de la fraise (6), l'étape suivante est mise en oeuvre:
- positionnement d'un outil de coupe sur la région du bord de la paroi intérieure (4) de la pièce (1) afin d'enlever ainsi la bavure formée vers l'extérieur de la pièce (1).

5. Procédé selon l'une quelconque des revendications 1 à 4, **caractérisé en ce que** le diamètre intérieur de la pièce (1) est au maximum deux fois plus grand, préférablement au maximum un tiers plus grand que le diamètre de la fraise.

6. Procédé selon l'une quelconque des revendications 1 à 5, **caractérisé en ce qu'**une denture droite (3) est produite qui est substantiellement en regard de l'axe central de l'intérieur de la pièce (1).

7. Procédé selon l'une quelconque des revendications 1 à 6, **caractérisé en ce que** la fraise (6) comporte entre une et sept, préférablement exactement une dent de fraise (15).

8. Dispositif pour la formation d'une denture intérieure dans une pièce (1) de forme creuse, plus particulièrement un cylindre creux, comprenant une fraise (6) adaptée à être positionnée sur un premier point de travail (21) dans la région du bord de la paroi intérieure (4) de la pièce et à être avancée dans l'intérieur de la pièce (4) le long d'une direction d'avance (V) tangentielle à sa paroi intérieure (4), **caractérisé en ce que** la fraise (6) est dégagée de deux côtés opposés de la fraise, le sens de rotation de la fraise (6) allant d'un côté dégagé de la fraise dans la direction d'avance dans laquelle la fraise sera avancée pendant l'étape suivante de la formation de la denture intérieure, ce qui conduit, en cours de fonctionnement, à la formation d'une bavure dirigée vers l'intérieur de la pièce, et le sens de rotation de la fraise (6) de l'autre côté dégagé de la fraise étant opposé en cours de fonctionnement à la direction d'avance afin de former la denture intérieure en continuant le mouvement de roulement et l'avancement, et le dispositif comprenant des moyens permettant de repositionner la fraise entre le premier point de travail (21) et un deuxième point de travail (22) sur la circonférence intérieure de la pièce (1) de telle manière qu'après le repositionnement, la fraise (6) est amenée en contact de l'autre côté dégagé de la fraise avec le deuxième point de travail.

9. Dispositif selon la revendication 8, **caractérisé par** au moins deux, préférablement au moins trois roues dentées (7, 8, 9) pour transmettre la force rotatrice d'un entraînement de la fraise à la fraise, les roues dentées (12, 13, 14) étant agencées en une rangée longitudinale dans la direction d'avance (V) substantiellement.

10. Dispositif selon la revendication 8 ou 9, **caractérisé en ce que** l'axe de la fraise est relié à un support longitudinal (11) s'étendant dans la direction d'avance (V) substantiellement.

11. Dispositif selon l'une quelconque des revendications 8 à 10, **caractérisé en ce que** l'épaisseur de la fraise est inférieure à un tiers, préférablement inférieure à un huitième du diamètre de la fraise.
